# EUROPÄISCHE PATENTSCHRIFT

(11) **EP 2 733 389 B1**
(45) Veröffentlichungstag und Bekanntmachung des Hinweises auf die Patenterteilung: **02.03.2016**
(21) Anmeldenummer: 13193083.6
(22) Anmeldetag: 15.11.2013
(51) Int. Cl.: F16H 57/033, F16H 57/038

(54) **Winkelgetriebe**
Angular gear unit
Engrenage angulaire

(30) Priorität: 19.11.2012 DE 102012221020
(43) Veröffentlichungstag der Anmeldung: 21.05.2014
(73) Patentinhaber: ebm-papst ZEITLAUF GmbH & Co. KG, 91207 Lauf a. d. Pegnitz (DE)
(72) Erfinder: Mika, Martin, 91207 Lauf a. d. Peg. (DE); Kaiser, Benjamin, 90459 Nürnberg (DE); Federsel, Thomas, 92318 Neumarkt (DE)
(74) Vertreter: Rau, Schneck & Hübner Patentanwälte Rechtsanwälte PartGmbB

(56) Entgegenhaltungen:
- EP-A1- 0 740 401
- WO-A1-99/18369
- WO-A1-2005/100826
- DE-U1- 8 628 894
- US-A1- 2003 101 837

## Beschreibung

Die Erfindung betrifft ein Winkelgetriebe nach dem Oberbegriff des Patentanspruches 1.

Derartige Winkelgetriebe sind beispielsweise durch offenkundige Vorbenutzung der Anmelderin selbst in Form der Getriebe-Baureihe "EtaCrown" bekannt. Diese Winkelgetriebe umfassen eine Getriebevorstufe mit einem ersten Planetengetriebe, ein davon angetriebenes Kronenradgetriebe, und ein wiederum davon angetriebenes zweites Planetengetriebe. Dessen antriebsseitiges Sonnenrad ist mit dem Kronenrad des Kronenradgetriebes gekoppelt, indem es eine Baueinheit bildet.

Das bekannte Winkelgetriebe umfasst ferner ein mehrteiliges Gehäuse, wobei die Getriebevorstufe einen zylindrischen Gehäusekörper aufweist, an dem ein entsprechender Antriebsmotor angeflanscht werden kann.

Das Kronenradgetriebe und das zweite Planetengetriebe sind ebenfalls in einem Getriebegehäuse untergebracht, das im Wesentlichen würfelförmig ausgebildet ist.

Die bekannten Winkelgetriebe sind bewährt, von großer Zuverlässigkeit, Variabilität und Laufruhe. Allerdings sind bestimmte Konstruktionsbauteile, wie das aufwendig zu spanende Hohlrad der zweiten Getriebestufe und das relativ großvolumige Rillenkugellager in einem Getriebedeckel des Getriebegehäuses kostenintensiv. Ferner ist bei dieser Lagerung eine Abdichtung des Deckels nicht möglich.

Auch die Montagefreundlichkeit des bekannten Winkelgetriebes ist an verschiedenen Punkten verbesserungsfähig. So sind die Planetenräder des zweiten Planetengetriebes aufwendig durch einzelne Sicherungsringe axial fixiert. Für das das Hohlrad aufnehmende Gehäuse mit seiner runden Innenstruktur ist ein relativ hoher Nacharbeitsaufwand vonnöten. Schließlich sind bei dem bekannten Winkelgetriebe unterschiedliche Montage- und Verschraubungsrichtungen festzustellen, was ebenfalls eine gewisse Verkomplizierung des Montagevorgangs mit sich bringt.

Ausgehend von den geschilderten Problemen des Standes der Technik liegt der Erfindung die Aufgabe zugrunde, ein Winkelgetriebe der gattungsgemäßen Art so zu verbessern, dass es bei konstruktiver Vereinfachung rationeller zu fertigen ist.

Diese Aufgabe wird durch die im Kennzeichnungsteil des Anspruchs 1 angegebenen Merkmale gelöst. Demnach weist das zweite Planetengetriebe einen als vormontierte Einheit ausgebildeten Planetenträger mit darauf gelagerten Planetenrädern und einem formschlüssig-rotationsfest in das Getriebegehäuse eingesetzten Hohlrad auf. Es wird also eine Vormontage-Baugruppe für das zweite Planetengetriebe gebildet, bei der die Montage ferner aufgrund des formschlüssig-rotationsfest in das Getriebegehäuse eingesetzten Hohlrades stark vereinfacht ist. Weitere Maßnahmen zur Rotationsfixierung des Hohlrades müssen damit nicht mehr vorgenommen werden.

Gemäß einer bevorzugten Ausführungsform ist die Vormontage-Baugruppe des zweiten Planetengetriebes gemeinsam durch eine Sicherungsscheibe in ihrer Montageposition im Getriebegehäuse fixiert. Insbesondere durch die axiale Verschraubung im Getriebegehäuse ist eine sehr einfache Montagetechnik zu erreichen, wobei die Sicherungsscheibe eine Doppelfunktion erfüllt. Sie sichert nämlich nicht nur in einfacher Weise in axialer Richtung die Planetenräder auf dem Planetenträger, sondern gleichzeitig auch das Hohlrad über die durch dieses hindurchgehende Verschraubung.

Gemäß einer weiteren bevorzugten Ausführungsform der Erfindung greift das mit dem Kronenrad gekoppelte, koaxial damit sitzende Sonnenrad über eine entsprechende Durchgriffsöffnung in der Sicherungsscheibe mit den Planetenrädern des zweiten Planetengetriebes ein. Auch hier spielt also die Sicherungsscheibe mit ihrer Durchgriffsöffnung eine weitere funktionale Rolle, da diese Öffnung als eine Montagehilfe für das Einsetzen des Sonnenrades in die Planetenräder dient.

Die gemäß einer weiteren bevorzugten Ausführungsform vorgesehene Anschlag-Ringschulter zwischen Kronenrad und Sonnenrad vereinfacht die axiale Fixierung des Kronenrades mit dem in die Planetenräder des zweiten Planetengetriebes eingreifenden Sonnenrad.

Die Zahnräder des zweiten Planetengetriebes, also Hohlrad und/oder Planetenräder können in kostengünstiger Ausprägung aus einem Sinterwerkstoff bestehen. Damit wird auch gleichzeitig eine einfache Herstellbarkeit der formschlüssig in das Getriebegehäuse eingreifenden Außenkontur des Hohlrades erreicht.

Eine weitere bevorzugte Weiterbildung des erfindungsgemäßen Winkelgetriebes sieht eine Ausbildung des Kronenrad-Lagers auf seiner vom zweiten Planetengetriebe abgewandten Seite in Form eines Gleitlagers in einem Deckel des Getriebegehäuses vor. Dieses kostengünstige Lager kann in einem geschlossenen Deckel mit großer IP-Schutzart angeordnet sein, sodass das erfindungsgemäße Getriebe besonders gut auch für raue Einsatzbedingungen geeignet ist.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig.1: eine Explosionsdarstellung eines Winkelgetriebes, sowie
- Fig.2 - 8: ausschnittsweise perspektivische Ansichten eines Gehäuseteils des Winkelgetriebes gemäß Fig.1 mit einem Planetengetriebe in aufeinanderfolgenden Fertigungszwischenschritten.

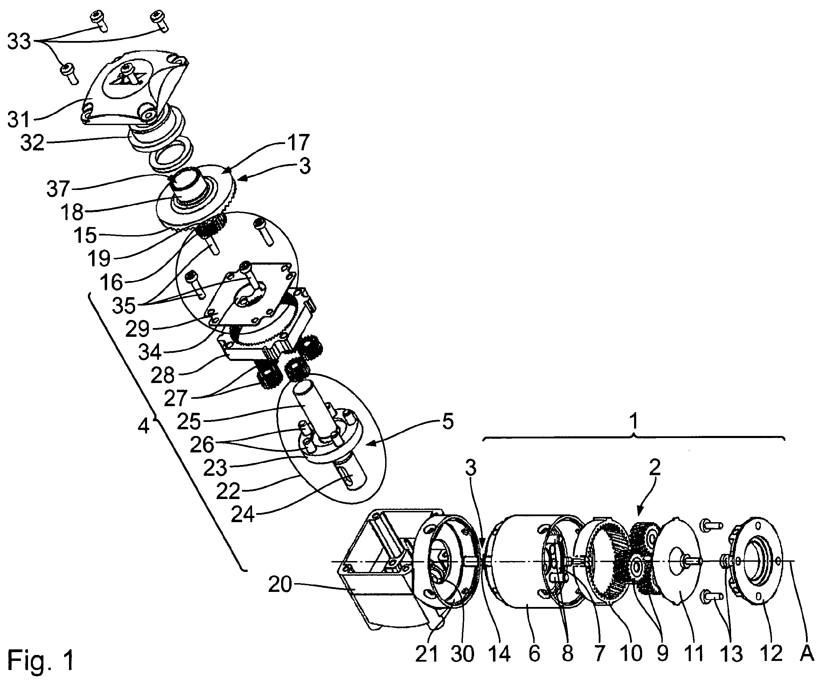

Wie aus Fig.1 deutlich wird, weist das gezeigte Winkelgetriebe eine Getriebevorstufe 1 mit einem ersten Planetengetriebe 2, ein davon angetriebenes Kronenradgetriebe 3 sowie ein wiederum davon angetriebenes zweites Planetengetriebe 4 auf, dessen Abtriebswelle 5 in einem rechten Winkel zur vom ersten Planetengetriebe 2 gebildeten antriebsseitigen Axialrichtung A steht.

Das erste Planetengetriebe 2, das in einem zylindrischen Gehäuseteil 6 untergebracht ist, ist konventioneller Bauart und weist einen Planetenträger 7 auf, auf dessen Achsstummeln 8 die drei Planetenräder 9 dieses ersten Planetengetriebes 2 drehbar gelagert sind. Letztere stehen mit dem drehfest in das zylindrische Gehäuseteil 6 eingesetzten Hohlrad 10 in Eingriff.

Die Planetenräder 9 werden über eine in das Gehäuseteil 6 einsetzbare Ringscheibe 11 auf dem Planetenträger 7 gesichert. Ein Gehäusedeckel 12 ist darauf ebenfalls in das Gehäuseteil 6 einsetzbar und durch nicht dargestellte Radialschrauben im Gehäuseteil 6 fixierbar.

Durch die vier gezeigten Verbindungsschrauben 13 kann ein nicht dargestellter Antriebsmotor an das erste Planetengetriebe 2 angeflanscht werden, in dessen Planetenrädern 9 dann das als Sonnenrad des Planetengetriebes 2 fungierende Abtriebsritzel 14 eingreift.

Das noch knapp mit seinem Ende erkennbare, zylindrische, koaxial zur Axialrichtung A liegende Abtriebsritzel 14 fungiert als Antriebszahnrad des Kronenradgetriebes 3 und steht dazu mit dessen Kronenrad 15 in Eingriff. Dieses Kronenrad 15 wiederum bildet mit dem im Durchmesser deutlich kleineren Sonnenrad 16 eine Baueinheit 17, die auf der der Verzahnung abgewandten Seite des Kronenrades 15 einen Lagerstummel 18 und zwischen Kronenrad 15 und Sonnenrad 16 eine Anschlag-Ringschulter 19 mit einem gegenüber dem Sonnenrad 16 größeren Durchmesser aufweist.

Das Kronenradgetriebe 2 und zweite Planetengetriebe 4 ist in einem etwa würfelförmigen Gehäuseteil 20 untergebracht, an das das zylindrische Gehäuseteil 6 mit dem ersten Planetengetriebe 2 über eine Ringschulter 21 angeflanscht werden kann.

Das zweite Planetengetriebe 4 weist einen als vormontierte Einheit 22 ausgebildeten Planetenträger 23 mit langgestreckten, koaxialen Lagerachsen 24, 25 und Achsstummeln 26 für die fünf Planetenräder 27 des zweiten Planetengetriebes 4 auf. Letztere wiederum stehen mit dem Hohlrad 28 des zweiten Planetengetriebes 4 in Eingriff. Sowohl die Planetenräder 27 als auch das Hohlrad 28 sind aus einem Sinterwerkstoff gefertigt. Das Hohlrad 28 weist dabei eine dem Innenquerschnitt des würfelförmigen Gehäuseteils 20 entsprechende Außenkontur auf, sodass das Hohlrad 28 formschlüssigrotationsfest in das Gehäuseteil 20 eingesetzt und in noch näher zu erläuternder Weise mittels einer Sicherungsscheibe 29 fixiert werden kann.

Weitere Bauteile des Kronenradgetriebes 3 und des zweiten Planetengetriebes 4 sind ein Kugellager 30 zur Lagerung der die Abtriebswelle 5 des Winkelgetriebes darstellenden Lagerachse 24 des Planetenträgers 23 sowie ein auf der davon abgewandten Seite in einem geschlossenen Deckel 31 eingesetztes, einfaches Gleitlager 32, in dem der Lagerstummel 18 der Baueinheit 17 drehbar gelagert ist. In der durchgehenden Innenöffnung 37 der Baueinheit 17 ist wiederum die Lagerachse 25 der vormontierten Einheit 22 des Planetenträgers 23 drehbar gelagert. Der Deckel 31 ist über Schrauben 33 hermetisch dicht auf das Gehäuseteil 20 aufschraubbar und kann dementsprechend eine hohe IP-Schutzart aufweisen.

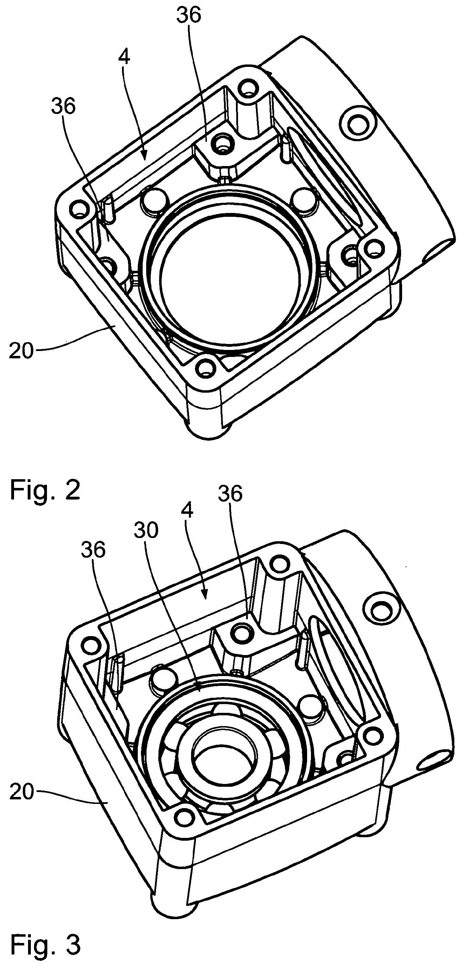

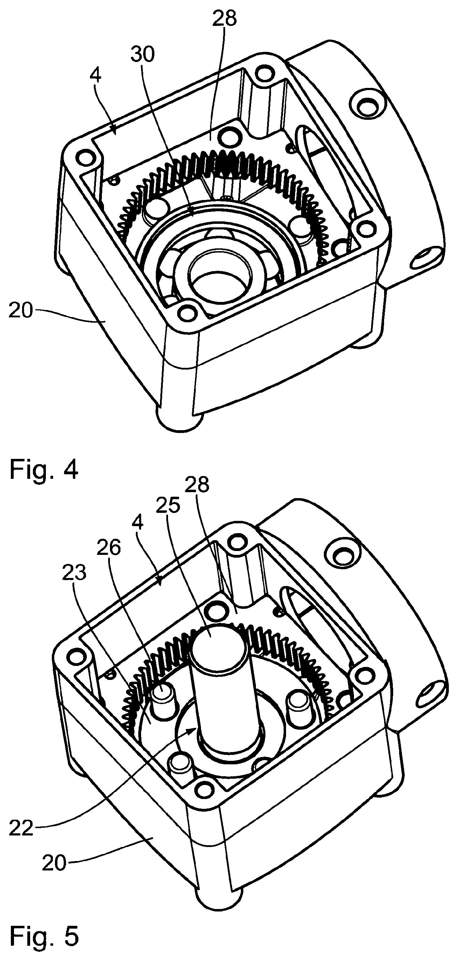

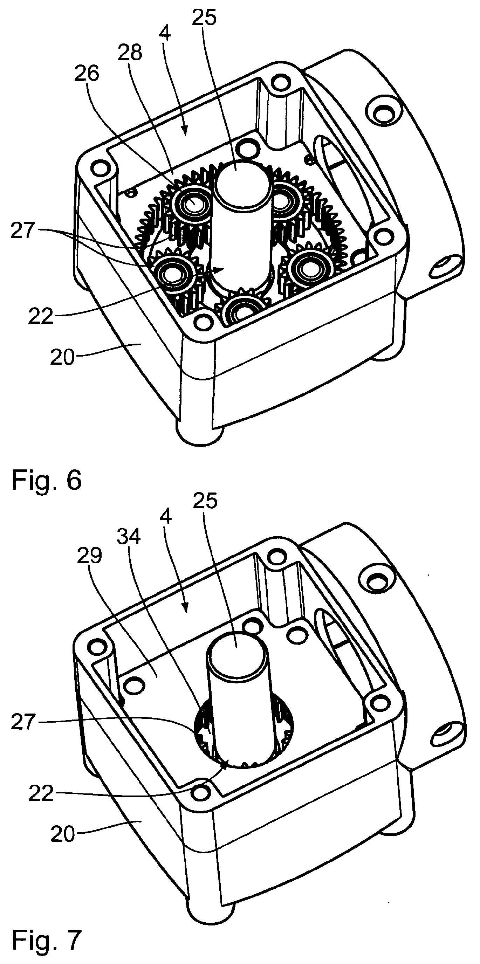

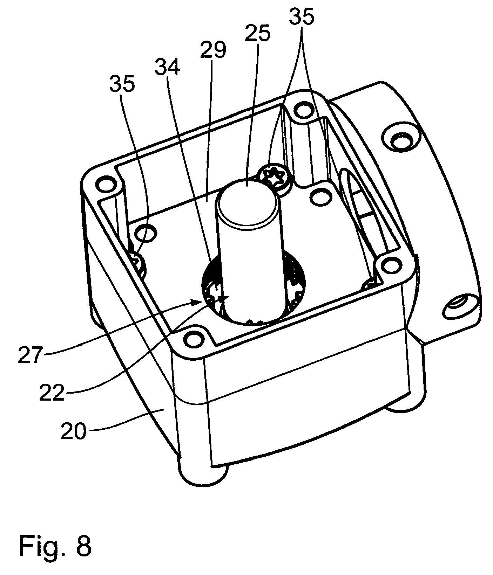

Anhand der Fig.2 bis 8 ist die Montage des zweiten Planetengetriebes 4 im Gehäuseteil 20 zu erläutern. So wird ausgehend von dem in Figur 2 gezeigten, leeren Zustand des offenen Gehäuseteils 20 das Kugellager 30 eingepresst und verstemmt. Anschließend wird - wie Figur 4 zeigt - das Hohlrad 28 eingelegt. Danach folgt die in Figur 5 erkennbare, vormontierte Einheit 22, die mit der Lagerachse 24 durch das Kugellager 30 gesteckt wird. Auf die Achsstummeln 26 werden die Planetenräder 27 aufgesetzt (Figur 6) und anschließend die Sicherungsscheibe 29 aufgelegt. Wie in Figur 7 erkennbar ist, weist die Sicherungsscheibe 29 eine zentrale Durchgriffsöffnung 34 auf, durch die das mit dem Kronenrad 15 der Baueinheit 17 gekoppelte Sonnenrad 16 hindurch steht und mit den Planetenrädern 27 des zweiten Planetengetriebes 4 in Eingriff steht.

Die Sicherungsscheibe 29 wird schließlich über Axialschrauben 35 mit dem Hohlrad 28 und den in den Ecken angeordneten Auflagesockeln 36 im Gehäuseteil 20 axial verschraubt.

Anschließend kann die Baueinheit 17 aufgesetzt und der Deckel 31 mit dem Gleitlager 32 im Gehäuseteil 20 und dem Lagerstummel 18 verbunden und so das Winkelgetriebe komplettiert werden.

## Patentansprüche

1. Winkelgetriebe, umfassend
- eine Getriebevorstufe (1) mit einem ersten Planetengetriebe (2),
- ein davon angetriebenes Kronenradgetriebe (3),
- ein davon angetriebenes zweites Planetengetriebe (4), dessen antriebseitiges Sonnenrad (16) drehfest mit dem Kronenrad (15) des Kronenradgetriebes (3) gekoppelt ist, und
- ein Getriebegehäuse (20), in dem das Kronenradgetriebe (3) und das zweite Planetengetriebe (4) untergebracht sind,
**dadurch gekennzeichnet, dass**
- das zweite Planetengetriebe (4) einen als vormontierte Einheit (22) ausgebildeten Planetenträger (23) mit darauf gelagerten Planetenrädern (27) und einem formschlüssig-rotationsfest in das Getriebegehäuse (20) eingesetzten Hohlrad (28) aufweist.

2. Winkelgetriebe nach Anspruch 1, **dadurch gekennzeichnet, dass** die Vormontage-Baugruppe des zweiten Planetengetriebes (4) aus Planetenträger (23), Planetenrädern (27) und Hohlrad (28) gemeinsam durch einen Sicherungsscheibe (29) in ihrer Montageposition im Getriebegehäuse (20) fixiert ist.

3. Winkelgetriebe nach Anspruch 2, **dadurch gekennzeichnet, dass** die Sicherungsscheibe (29) durch eine axiale Verschraubung (35) im Getriebegehäuse (20) gehalten ist.

4. Winkelgetriebe nach Anspruch 2 oder 3, **dadurch gekennzeichnet, dass** das mit dem Kronenrad (15) gekoppelte Sonnenrad (16) über eine Durchgriffsöffnung (34) in der Sicherungsscheibe (29) mit den Planetenrädern (27) des zweiten Planetengetriebes (4) eingreift.

5. Winkelgetriebe nach einem der Ansprüche 2 bis 4, **dadurch gekennzeichnet, dass** die Baueinheit (17) aus Kronenrad (15) und Sonnenrad (16) zwischen Kronenrad (15) und Sonnenrad (16) eine Anschlag-Ringschulter (19) aufweist, über die sich die Baueinheit (17) axial an der Sicherungsscheibe (29) abstützt.

6. Winkelgetriebe nach einem der vorgenannten Ansprüche, **dadurch gekennzeichnet, dass** das Hohlrad (28) aus einem Sinterwerkstoff besteht.

7. Winkelgetriebe nach einem der vorgenannten Ansprüche, **dadurch gekennzeichnet, dass** die Planetenräder (27) des zweiten Planetengetriebes (4) aus einem Sinterwerkstoff bestehen.

8. Winkelgetriebe nach einem der vorgenannten Ansprüche, **dadurch gekennzeichnet, dass** das Kronenrad (15) des Kronenradgetriebes (3) auf seiner vom zweiten Planetengetriebe (4) abgewandten Seite über ein Gleitlager (32) in einem Deckel (31) des Getriebegehäuses (20) gelagert ist.

9. Winkelgetriebe nach Anspruch 8, **dadurch gekennzeichnet, dass** der Deckel (31) ein geschlossener Deckel mit IP-Schutzart ist.

## Claims

1. Angular gear unit, comprising
- a gear preliminary stage (1) with a first planetary gear (2),
- a crown gear (3) driven thereby,
- a second planetary gear (4) driven thereby, the drive-side sun gear (16) of which is coupled in a rotationally secure manner to the crown gear (15) of the crown gear (3), and
- a gear housing (20), in which the crown gear (3) and the second planetary gear (4) are accommodated,
**characterised in that**
- the second planetary gear (4) comprises a planetary carrier (23) designed as a premounted unit (22) with planetary gears (27) mounted thereon and a ring gear (28) inserted in a form-fitting manner rotationally securely into the gear housing (20).

2. Angular gear unit according to claim 1, **characterised in that** the preassembly unit of the second planetary gear (4) consisting of the planetary carrier (23), planetary gears (27) and ring gear (28) is fixed jointly by a securing disc (29) in its assembly position in the gear housing (20).

3. Angular gear unit according to claim 2, **characterised in that** the securing disc (29) is held by an axial screw connection (35) in the gear housing (20).

4. Angular gear unit according to claim 2 or 3, **characterised in that** the sun gear (16) coupled to the crown gear (15) engages via a feedthrough opening (34) in the securing disc (29) with the planetary gears (27) of the second planetary gear (4).

5. Angular gear unit according to any one of claims 2 to 4, **characterised in that** the structural unit (17) consisting of the crown gear (15) and sun gear (16) comprises a stop ring shoulder (19) between the crown gear (15) and sun gear (16), by means of which the structural unit (17) is supported axially on the securing disc (29).

6. Angular gear unit according to any one of the preceding claims, **characterised in that** the ring gear (28) is made from a sintered material.

7. Angular gear unit according to any one of the preceding claims, **characterised in that** the planetary gears (27) of the second planetary gear (4) are made from a sintered material.

8. Angular gear unit according to any one of the preceding claims, **characterised in that** the crown (15) of the crown gear (3) on its side facing away from the second planetary gear (4) is mounted via a slide bearing (32) in a cover (31) of the gear housing (20).

9. Angular gear unit according to claim 8, **characterised in that** the cover (31) is a closed cover with IP-type protection.

## Revendications

1. Engrenage angulaire, comprenant
- un étage préliminaire d'engrenage (1) pourvu d'un premier engrenage planétaire (2),
- un engrenage à roue de chant (3) entraîné par celui-ci,
- un deuxième engrenage planétaire (4) entraîné par celui-ci, dont la roue solaire (16) côté entraînement est couplée de manière solidaire en rotation à la roue de chant (15) de l'engrenage à roue de chant (3), et
- un carter d'engrenage (20), dans lequel l'engrenage à roue de chant (3) et le deuxième engrenage planétaire (4) sont abrités,
**caractérisé en ce**
- **que** le deuxième engrenage planétaire (4) présente une cage de transmission planétaire (23) réalisée sous la forme d'une unité (22) préinstallée, pourvue de roues planétaires (27) montées dessus et pourvue d'une couronne (28) insérée de manière solidaire en rotation-par complémentarité de forme dans le carter d'engrenage (20).

2. Engrenage angulaire selon la revendication 1, **caractérisé en ce que** le groupe de préinstallation du deuxième engrenage planétaire (4) composé conjointement d'une cage de transmission planétaire (23), de roues planétaires (27) et d'une couronne (28) est fixé par une rondelle de sécurité (29) dans sa position d'installation dans le carter d'engrenage (20).

3. Engrenage angulaire selon la revendication 2, **caractérisé en ce que** la rondelle de sécurité (29) est maintenue par un vissage (35) axial dans le carter d'engrenage (20).

4. Engrenage angulaire selon la revendication 2 ou 3, **caractérisé en ce que** la roue solaire (16) couplée à la roue de chant (15) vient en prise, par l'intermédiaire d'une ouverture de passage (34) dans la rondelle de sécurité (29), avec les roues planétaires (27) du deuxième engrenage planétaire (4).

5. Engrenage angulaire selon l'une quelconque des revendications 2 à 4, **caractérisé en ce que** l'unité modulaire (17) composée de la roue de chant (15) et de la roue solaire (16) présente, entre la roue de chant (15) et la roue solaire (16), un épaulement annulaire de butée (19), par l'intermédiaire duquel l'unité modulaire (17) prend appui de manière axiale au niveau de la rondelle de sécurité (29).

6. Engrenage angulaire selon l'une quelconque des revendications précédentes, **caractérisé en ce que** la couronne (28) est constituée d'un matériau de frittage.

7. Engrenage angulaire selon l'une quelconque des revendications précédentes, **caractérisé en ce que** les roues planétaires (27) du deuxième engrenage planétaire (4) sont constituées d'un matériau de frittage.

8. Engrenage angulaire selon l'une quelconque des revendications précédentes, **caractérisé en ce que** la roue de chant (15) de l'engrenage à roue de chant (3) est montée, sur son côté opposé au deuxième engrenage planétaire (4), par l'intermédiaire d'un palier coulissant (32), dans un couvercle (31) du carter d'engrenage (20).

9. Engrenage angulaire selon la revendication 8, **caractérisé en ce que** le couvercle (31) est un couvercle fermé présentant un indice de protection IP.
